Europäisches Patentamt

European Patent Office

Office européen des brevets

(11) Publication number: **0 239 344**
**A2**

# EUROPEAN PATENT APPLICATION

(21) Application number: 87302469.9

(22) Date of filing: 23.03.87

(51) Int. Cl.⁴: **B 62 D 13/04**

(30) Priority: 25.03.86 GB 8607320

(43) Date of publication of application:
30.09.87 Bulletin 87/40

(84) Designated Contracting States:
BE DE FR GB IT NL

(71) Applicant: WILSON DOUBLE-DECK TRAILERS LIMITED
Culcavey
Hillsborough County Down, BT26 6JJ Northern
Ireland (GB)

(72) Inventor: Wilson, Frederick George
49 Old Hillsborough Road
Lisburn County Antrim Northern Ireland (GB)

(74) Representative: Sorrell, Terence Gordon et al
Fitzpatricks 4 West Regent Street
Glasgow G2 1RS Scotland (GB)

(54) Improvements relating to trailers.

(57) A steering assembly for a trailer which comprises a draw bar assembly (15, 25) for attachment to a towing vehicle such that steering of the towing vehicle normally controls steering of the trailer during forward movement thereof. The assembly is such that at least for reversing, such control can be uncoupled and steering of the trailer can be controlled by power operated means (18, 26) operable separate from the steering provided by the towing vehicle.

Fig.1.

**Description**

## IMPROVEMENTS RELATING TO TRAILERS

The invention relates to trailers and more particularly to steering assemblies for trailers having at least two axles, the wheels of the forward one of which is capable of being steered.

When a steerable trailer is towed by a lorry or truck there are very little problems in such towing when proceeding in a forward direction. However when reversing considerable difficulties arise since the steering of the trailer is controlled by the movement of the forward steerable wheels of the towing lorry or truck, and because of the length of such towing lorry or truck long distances are required to move to position the steering correctly and to vary such steering, which causes extreme difficulties in manoeuverability in confined spaces.

It is an object of the invention to obviate or mitigate such problems.

According to the invention there is provided a steering assembly for a trailer which comprises a draw bar assembly for attachment to a towing vehicle such that steering of the towing vehicle normally controls steering of the trailer during forward movement thereof, the assembly being such that at least for reversing, such control can be uncoupled and steering of the trailer can be controlled by power operated means operable separate from the steering controls provided by towing vehicle.

In one embodiment of the invention the steering assembly comprises a turntable for mounting a forward steerable axle of a trailer, the turntable having a pair of pivotally mounted links both attached to the draw bar assembly at the forward end thereof and one attached at each side of the turntable at the rearward end thereof for normally steering the trailer in the forward direction, one such link being uncoupleable, at least during reversing, and the other such link having a power drive for energisation to control movement thereof for steering movement of the turntable prior or during reversing or forward movement of the trailer to which the assembly is attached during manoeuvering of the trailer.

In such embodiment said other link may include a double acting fluid operable ram which is arranged to be locked during normal forward movement of the trailer and which can be controlled to control steering movement during at least reversing of the trailer.

In a further embodiment of the invention the steering assembly comprises a track rod and links normally attached to the draw bar for normally steering forward movement of the trailer, such draw bar attachment being capable of at least partial disconnection to enable separate power operable means to provide such steering during at least reversing of the trailer.

In such an embodiment a double acting fluid operable ram may be included preferably in the track rod and normally arranged to float during forward movement of the trailer and which is controllable to control steering movement during at least reversing of the trailer.

The draw bar may be of two part form with at least a first part connected to the steering portion of the assembly and a second part connected to the draw bar position of the assembly, the first and second parts being disengageably connected. The first and second parts may comprise juxtaposed members preferably locatable one above the other, with alignable apertures to accommodate a locking pin. The fluid operable ram may be hydraulically or pneumatically controlled.

In both such above embodiments the power operated means may alternatively comprise an electrical control such as an electric motor with associated gearing.

The power operated means may be controlled manually from adjacent and derived from controls attached to the trailer or may be controlled from the driver's cab of the lorry or truck. It is known that when a trailer is being towed forward by a lorry that by the nature of the steering, the trailer will 'cut in' when cornering and follow a smaller radius than the lorry.

On a king-pin type system of steering by changing the length of the radius on the drag link, in relation to the radius on the slave steering arm, the radius can be adjusted so that it can follow exactly the track of the towing lorry. This can be achieved by having a shorter radius on the slave steering arm. Such an arrangement can be provided for steerable trailers irrespective of the above described arrangements for enabling ease of reversing.

The foregoing and further features of the invention may be more readily understood from the following description of two preferred embodiments thereof, by way of example, with reference to the accompanying drawings; in which:-

Fig. 1 is a plan view of a trailer steering assembly of the turntable type;

Fig. 2 is a plan view of a trailer steering assembly of the track rod and link type being steered by a draw bar;

Fig. 3 is a plan view of Fig. 2 with separate power operated providing steering;

Fig. 4 is a plan view of an alternative arrangement of Fig. 3, and

Figs. 5 and 6 are detailed side and end elevational views of the arrangement of Figs. 2 and 3.

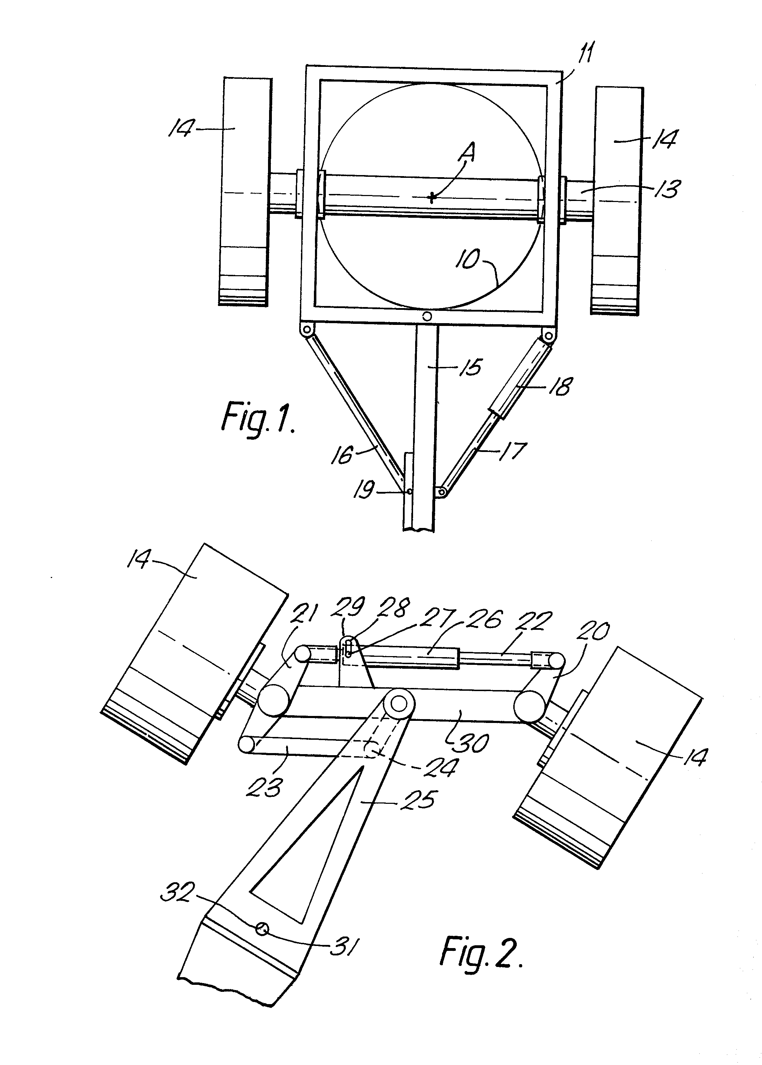

Referring now firstly to Fig. 1 there is shown a plan view of a steering assembly for a trailer of the turntable type, comprising a ring 10 about which a framework 11 is arranged to rotate about position A and mount an axle 13 for front wheels 14 of a trailer (not shown). A draw bar 15 is provided to be attached to a towing vehicle (not shown), such as a lorry or truck, and pivotally mounted links 16 and 17 are located between draw bar 15 and framework 11 for use in normal forward towing of the trailer. The link 17 includes a fluid actuable ram 18 which is double acting and normally stationary when the trailer is being towed in a forward direction. When the pin connection link 16 to the drawbar 15 is in position, this link maintains the drawbar at right-angles to the turntable frame. When a driver is in difficulty in reversing the trailer, the link 16 is uncoupled by removing connection pin 19 with draw bar 15, and the ram 18 is operated by the driver to steer the wheels 14 in the required direction irrespective of the draw bar 15 connection to the towing vehicle. The controls for such steering may be in the cab of the towing vehicle or adjacent the trailer.

Referring now to Fig. 2 of the drawings there is shown a plan view of a steering assembly for a trailer of the track rod and link type in which wheels 14 are rotatably mounted on bearings attached to a single link 20 and a double link 21 with one end of double link 21 being connected by a track rod 22 to single link 20. The other end of double link 21 is connected by a rod 23 to a pin connection 24 with a split draw bar 25. The split draw bar 25 is located by a pin 31 located in aligned apertures 32 therein. The track 22 includes a double acting ram 26 located by a pin 27 in a slot 28 of a flange 29 carried on axle 30 so as to allow forward and reverse movement of ram 26 but prevent lateral movement thereof. With the arrangement as shown in Fig. 2 movement of draw bar 25 controls the steering of wheels 14.

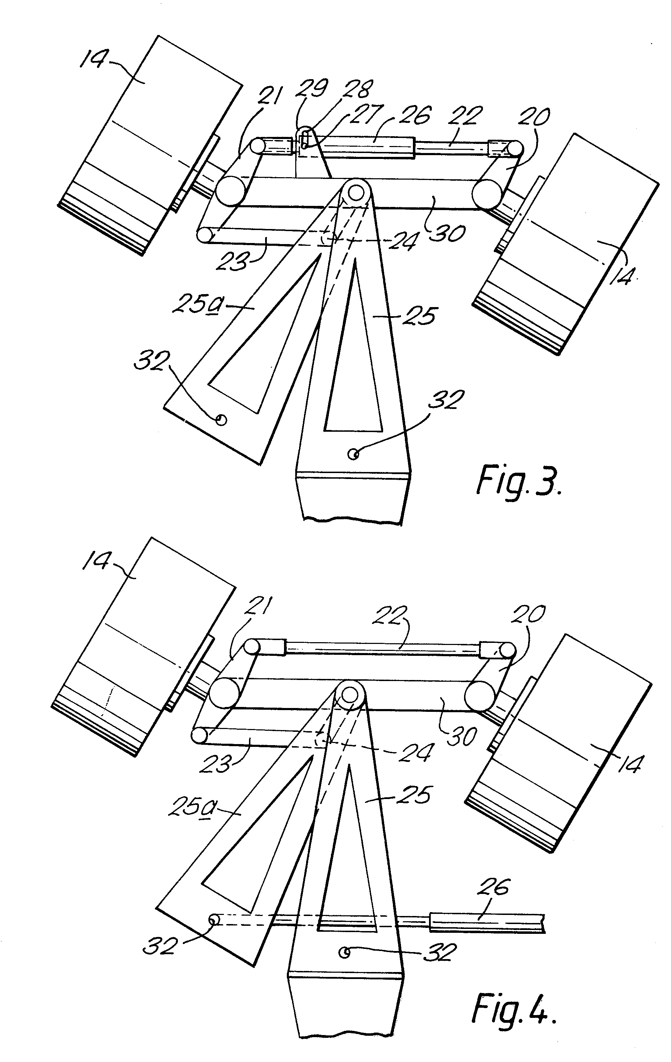

Referring now to Fig. 3 of the drawings there is shown a similar view to that of Fig. 2 except that the pin connection 31 has been removed and split draw bar 25 is separated with a lower portion 25a free from main portion 25. Ram 26 is now operable to control the angle of inclination of wheels 14 under control separate from draw bar 25 although such draw bar remains for connection to the towing vehicle. Hence the wheels 14 can be angled to any required position for positioning the trailer.

Referring now to Fig. 4 there is shown an arrangement similar to Fig. 3 except that ram 26 is located between the lower position of draw bar 25a and the chassis of the trailer (not shown) to provide positioning of wheels 14 separate from control of draw bar 25.

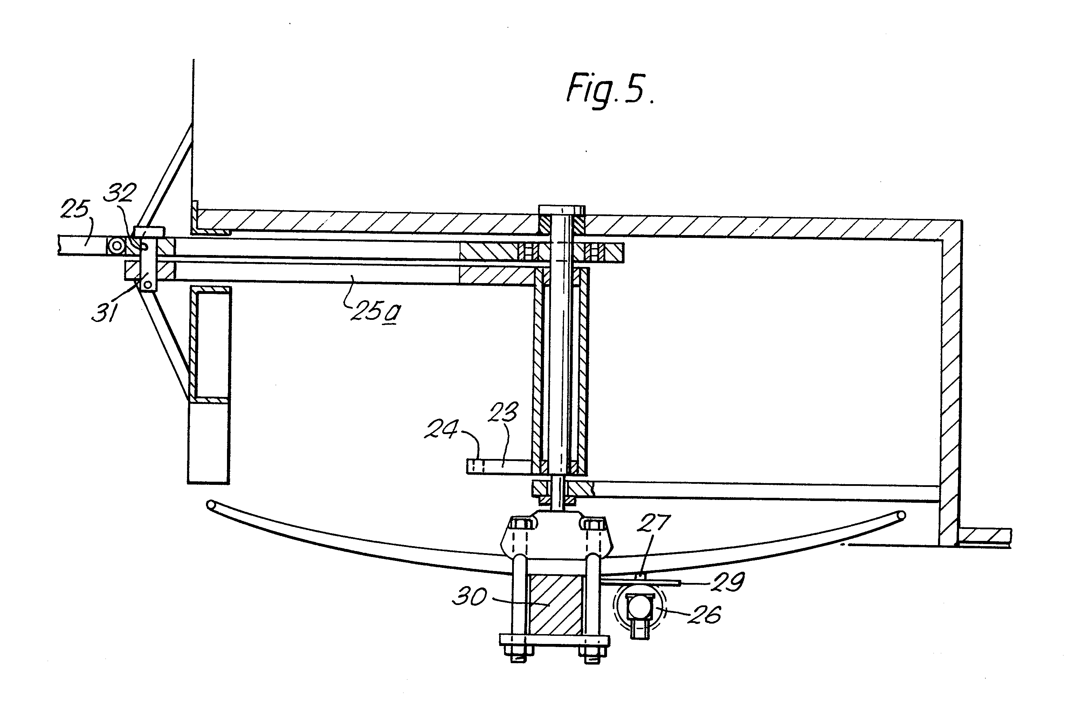

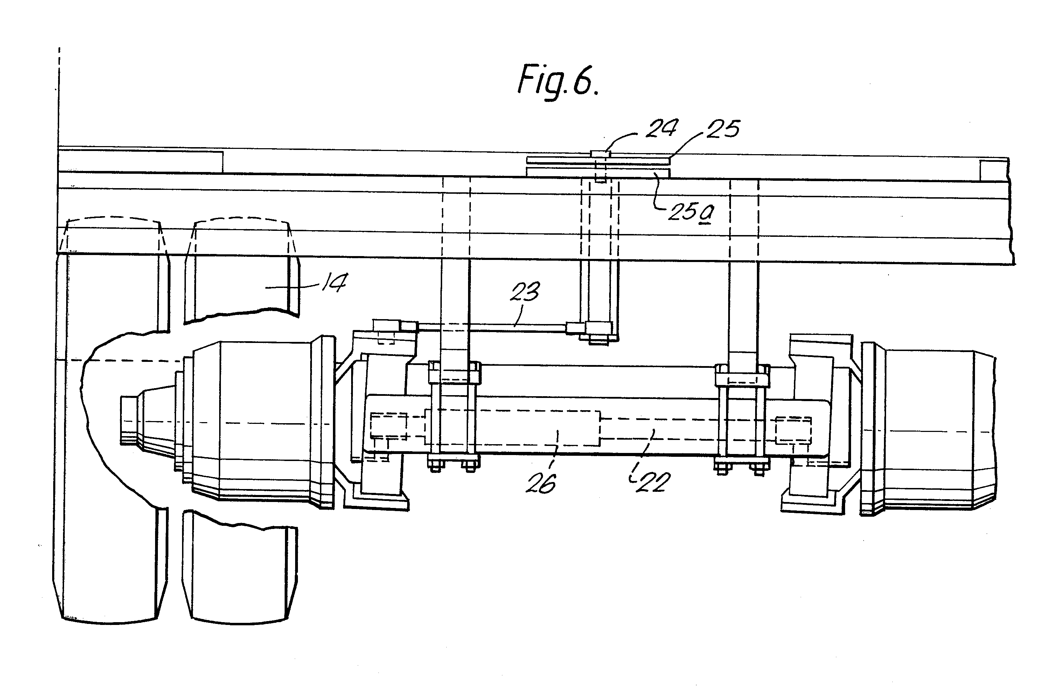

Referring now to Fig. 5 there is shown a side elevational view of a typical arrangement of a practical arrangement of the assembly of Figs. 2 and 3 and similarly Fig. 6 shows a practical end elevational view thereof.

With the arrangements shown the ram 18 or 26 may be pneumatically or hydraulically controlled either from adjacent the trailer or from the cab of the towing vehicle. Furthermore such rams could be replaced by other power control means such as electrical motors and gearing.

Link 23 may have a reduced length adjusted so that wheels 14 follow the track of the towing vehicle.

**Claims**

1. A steering assembly for a trailer which comprises a draw bar assembly (15, 25) for attachment to a towing vehicle such that steering of the towing vehicle normally controls steering of the trailer during forward movement thereof, characterised by the assembly being such that at least for reversing, such control can be uncoupled and steering of the trailer can be controlled by power operated means (18, 26) operable separate from the steering provided by the towing vehicle.

2. A steering assembly as claimed in claim 1 characterised by a turntable (Fig. 1) for mounting a forward steerable axle (13) of a trailer, the turntable having a pair of pivotally mounted links (16, 17) both attached to the draw bar (15) at the forward end thereof and one attached at each side of the turntable at the rearward end thereof for normally steering the trailer in the forward direction, one such link (16) being uncoupleable, at least during reversing, and the other such link (17) having a power drive (18) for energisation to control movement thereof for steering movement of the turntable prior or during reversing or forward movement of the trailer to which the assembly is attached during manoeuvering of the trailer.

3. A steering assembly as claimed in claim 2 characterised in that said other link (17) may include a double acting fluid operable ram (18) which is arranged to be locked during normal forward movement of the trailer and which can be controlled to control steering movement during at least reversing of the trailer.

4. A steering assembly as claimed in claim 1 characterised in that the steering assembly comprises a track rod (22) and links (20, 21) and a link (23) attached at one end to link (21) and at the other end to a draw bar attachment (25a) for normally steering forward movement of the trailer, such draw bar attachment (25a) being normally aligned and locked to draw bar (25) by a pin at (32) and being capable of at least partial disconnection (at 32) to enable separate power operable means (26) to provide such steering during at least reversing of the trailer during manoeuvring.

5. A steering assembly as claimed in claim 4 characterised in that a double acting fluid operable ram (26) comprises the track rod (22) and normally arranged to float during forward movement of the trailer and which is controllable to control steering movement during at least reversing of the trailer.

6. A steering assembly as claimed in claim 4 or 5 characterised in that the bar may be of two part form with at least a first part (25a) connected to the steering portion of the assembly and a second part (25 Fig. 3) connected to the draw bar position of the assembly, the first and second parts being disengageably connected.

7. A steering assembly as claimed in claim 6 characterised in that the first and second parts (25, 25a) comprise juxtaposed members preferably locatable one above the other, with alignable apertures to accommodate a locking pin (31).

8. A steering assembly as claimed in any preceding claim characterised in that the power operated means (26) is controlled manually from adjacent and derived from controls attached to the trailer or is controlled from the driver's cab of the lorry or truck.

9. A steering assembly as claimed in claim 5 characterised in that ram (26) is located to an axle (30) by a flange (29) by a pin (27) in a slot (28) to allow longitudinal movement of said ram (26) but prevent transverse movement thereof.

10. A steering assembly as claimed in claim 4 characterised in that said power operable means (26 (Fig. 4) is located to act between said draw bar attachment (25a) and a chassis portion of the vehicle.

Fig.1.

Fig.2.

0239344

17·0·r·ei

Fig.3.

Fig.4.

*Fig.5.*

Fig.6.